# EUROPEAN PATENT SPECIFICATION

(11) **EP 3 471 077 B1**
(45) Date of publication and mention of the grant of the patent: **08.09.2021**
(21) Application number: 18198237.2
(22) Date of filing: 02.10.2018
(51) Int. Cl.: G08G 1/16, B62D 15/02, G05D 1/02

(54) **AUTOMATED VEHICLE SAFETY SYSTEM THAT PROTECTS PEDESTRIANS**
SICHERHEITSSYSTEM FÜR AUTOMATISIERTES FAHRZEUG ZUM SCHUTZ VON FUSSGÄNGERN
SYSTÈME DE SÉCURITÉ DE VÉHICULE AUTOMATISÉ QUI PROTÈGE LES PIÉTONS

(30) Priority: 13.10.2017 US 201715783060
(43) Date of publication of application: 17.04.2019
(73) Proprietor: Aptiv Technologies Limited, St. Michael (BB)
(72) Inventor: HILNBRAND, Brian, R, MOUNTAIN VIEW, CALIFORNIA 94043 (US); LAUR, Michael, H, MISSION VIEJO, CALIFORNIA 92692 (US); AGARWAL, Divya, SUNNYVALE, CALIFORNIA 94086 (US)
(74) Representative: Manitz Finsterwald Patent- und Rechtsanwaltspartnerschaft mbB

(56) References cited:
- US-A1- 2017 249 836
- US-B1- 9 381 916

## Description

### TECHNICAL FIELD OF INVENTION

This disclosure generally relates to a safety system for an automated vehicle, and more particularly relates to a system that operates a host-vehicle to obstruct a travel-path of an approaching-vehicle when unimpeded travel by the approaching-vehicle on the travel-path may result in injury to a pedestrian.

### BACKGROUND OF INVENTION

It is recognized that are situations when a third-party can foresee an impending collision between a pedestrian and an approaching vehicle. US 9 381 916 B1 discloses an autonomous vehicle capable of detecting nearby objects, such as vehicles and pedestrians, and able to determine how the detected vehicles and pedestrians perceive their surroundings. The vehicle may use this information to safely maneuver around all nearby objects. US 2017/0249836 A1 discloses a conflict-resolution system for operating an automated vehicle. The system includes an intersection detector, a vehicle-detection device and a controller configured to determine a wait-time for the vehicle to wait before attempting to proceed into the intersection.

### SUMMARY OF THE INVENTION

The invention is defined according to appended independent system claim 1 and corresponding independent method claim 9.

Further details of the invention are defined in the dependent claims.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a diagram of a safety system for automated vehicle in accordance with one embodiment; and
Fig. 2 is a scenario encountered by the system of Fig. 1 in accordance with one embodiment.

### DETAILED DESCRIPTION

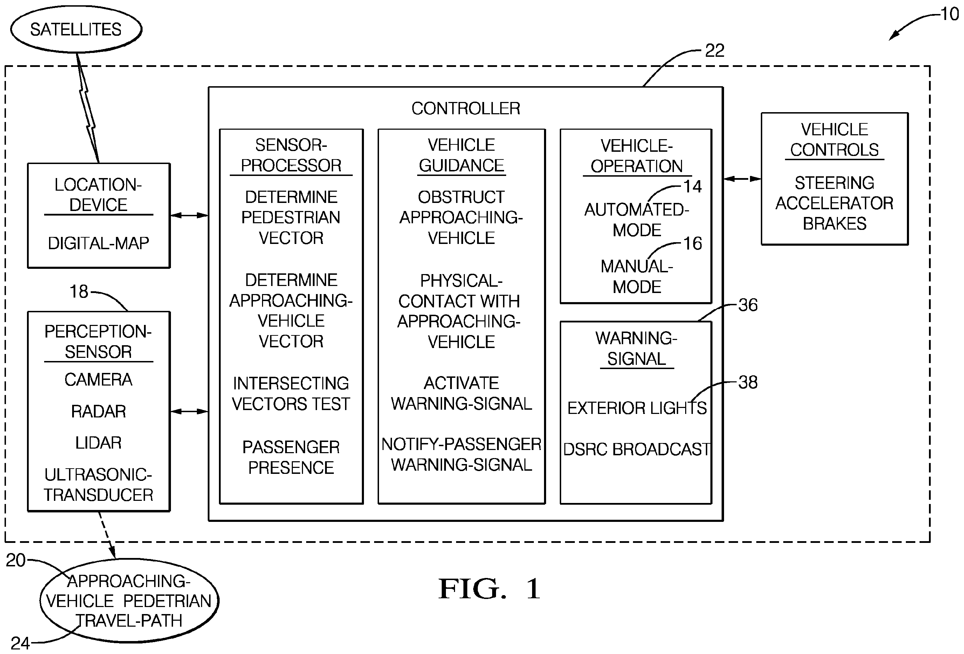

Fig. 1 illustrates a non-limiting example of a safety system 10, hereafter referred to as the system 10, which is generally intended for use by an automated vehicle, e.g. a host-vehicle 12. As used herein, the term automated vehicle may apply to instances when the host-vehicle 12 is being operated in an automated-mode 14, i.e. a fully autonomous mode, where a human-operator (not shown) of the host-vehicle 12 may do little more than designate a destination in order to operate the host-vehicle 12. However, full automation is not a requirement. It is contemplated that the teachings presented herein are useful when the host-vehicle 12 is operated in a manual-mode 16 where the degree or level of automation may be little more than providing an audible or visual warning to the human-operator who is generally in control of the steering, accelerator, and brakes of the host-vehicle 12. For example, the system 10 may merely assist the human-operator with steering or braking on an as needed basis.

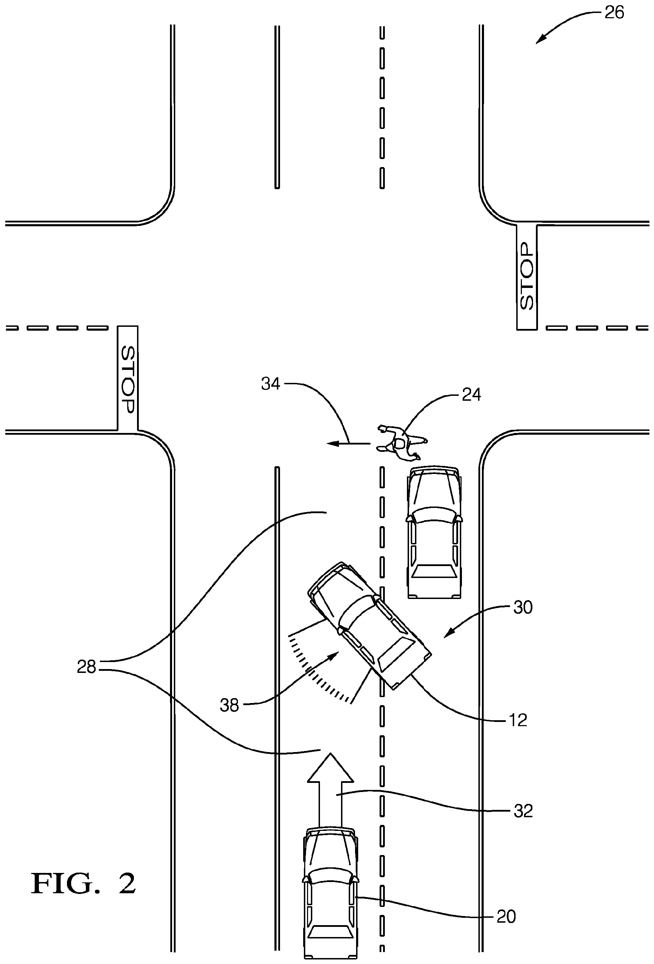

The system 10 includes an object-detector 18 that is operable to detect an approaching-vehicle 20 (see also Fig. 2) proximate to a host-vehicle 12. The object-detector 18 may consist of or include a camera, a radar, a lidar, an ultrasonic-transducer, or any combination thereof. Those in the vehicle perception sensor arts will recognize that there are many varieties of commercially available devices suitable to be used to form the object-detector 18. While Fig. 1 might be interpreted by some to suggest that all of the devices must be co-located, this is not a requirement. Indeed, as will become apparent in the description that follows, it may be preferable that the devices be distributed at different locations about the host-vehicle 12. Furthermore, it is expected that there will be multiple instances of a particular type of device, e.g. multiple radars mounted at different locations on the host-vehicle 12 in order to have different fields-of-view about the host-vehicle 12.

The system 10 includes a controller 22 in communication with the object-detector 18. The controller 22 may include a processor (not specifically shown) such as a microprocessor or other control circuitry such as analog and/or digital control circuitry including an application specific integrated circuit (ASIC) for processing data as should be evident to those in the art. The controller 22 may include memory (not specifically shown), including non-volatile memory, such as electrically erasable programmable read-only memory (EEPROM) for storing one or more routines, thresholds, and captured data. The one or more routines may be executed by the processor to perform steps for determining if the approaching-vehicle 20 represents a threat to, for example, a pedestrian 24 (see also Fig. 2) or a vehicle transporting passengers, based on signals received by the controller 22 from the object-detector 18 as described herein.

Fig. 2 illustrates a non-limiting example of a scenario 26 where the approaching-vehicle 20 may not detect the presence of the pedestrian 24 prior to crossing a travel-path 28 of the approaching-vehicle 20. It is noted that prior to the instant depicted in Fig. 2, the host-vehicle 12 was in an adjacent-lane 30 next to the lane identified as the travel-path 28, so at that prior time the forward movement of the approaching-vehicle 20 was unobstructed. At that prior time, the object-detector 18 of the host-vehicle 12 detected the presence of the pedestrian 24 and the approaching-vehicle 20, and the controller 22 was able to predict or foresee that the pedestrian 24 and the approaching-vehicle 20 would likely collide if both stayed on their present trajectories. For example, the controller 22 may determine a vehicle-vector 32 that indicates a speed and direction of travel of the approaching-vehicle 20, and determine a pedestrian-vector 34 that indicates a speed and direction of travel of the pedestrian 24. The controller 22 may then perform an intersecting vectors test to determine if the vehicle-vector 32 and the pedestrian-vector 34 suggest that a collision of the pedestrian 24 and the approaching-vehicle 20 is likely.

In order to prevent this predicted or forecasted collision, the controller 22 may be configured to operate the host-vehicle 12 to obstruct a travel-path 28 of the approaching-vehicle 20 when unimpeded travel by the approaching-vehicle 20 on the travel-path 28 may result in injury to a pedestrian 24. That is, as suggested in Fig. 2, the host-vehicle 12 may move into the travel-path 28 which will block or obstruct the forward movement of the approaching-vehicle 20, and optionally broadcast a warning to the approaching-vehicle 20, thereby affording some protection to the pedestrian 24. It is recognized that such an action by the host-vehicle 12 (i.e. action by the controller 22 or the system 10 in the operation of the host-vehicle 12) may place a passenger/operator of the host-vehicle 12 as some risk of injury, so the controller 22 may be optionally configured to operate the host-vehicle 12 to obstruct a travel-path 28 of the approaching-vehicle 20 only when the host-vehicle 12 is not occupied by a passenger or operator (not shown). Accordingly, the host-vehicle 12 may be equipped with interior sensors suitable to determine a passenger presence in the host-vehicle 12.

However, it is recognized that the probability of a collision between the host-vehicle 12 and the approaching-vehicle 20 due to the host-vehicle 12 moving into the travel-path 28 can be estimated, and if the probability of such a collision is less than some threshold, the system 10 or controller 22 may be configured to proceed with obstructing the travel-path 28 even if passenger is present in the host-vehicle 12. If such an action is selected, it is contemplated that the host-vehicle 12 would be equipped to notify the passenger with an audible and/or visual warning of the situation. That is, the controller 22 may be configured to notify a passenger of the host-vehicle 12 when unimpeded travel by the approaching-vehicle 20 on the travel-path 28 may result in injury to a pedestrian 24. It is contemplated that the pedestrian 24 could be or include a baby in a baby carriage (not specifically shown in the drawings) being pushed in front of a pedestrian 24, or a bicyclist or skateboarder in a designated pedestrian zone.

It is recognized that there may be circumstances when the only way to protect the pedestrian 24 would be to obstruct the travel-path 28 even though a collision between the approaching-vehicle 20 and the host-vehicle 12 was highly likely. That is, the controller 22 may be configured to operate the host-vehicle 12 to initiate physical-contact with the approaching-vehicle 20 to prevent injury to the pedestrian 24.

It may be advantageous of the host-vehicle 12 is configured to emit or broadcast some sort of a warning-signal 36 when the host-vehicle 12 is about to or is in the process of taking action to obstruct the travel-path 28. The warning-signal 36 may be provided by exterior-lights 38 arranged along the side of the host-vehicle 12, i.e. lights other than known brake/turn-signal indicator lights commonly found on vehicles. Alternatively, or in addition to the exterior-lights 38, the host-vehicle 12 may be equipped with infrastructure communication (V2I) and/or vehicle-to-vehicle (V2V) communication devices such as a dedicated-short-range-communications (DSRC) transceiver that can broadcast a message that the host-vehicle 12 is taking action to protect the pedestrian 24. That is, the controller 22 may be configured to activate the warning-signal 36 when unimpeded travel by the approaching-vehicle 20 on the travel-path 28 may result in injury to the pedestrian 24. The communications can be received by another vehicle or by the infrastructure. When received by the infrastructure additional warnings can be initiated from infrastructure components such as a safety siren, flashing lights, or a visually projected keep-out-zone in front of the pedestrian.

Accordingly, a safety system for an automated vehicle (the system 10), a controller 22 for the system 10, and a method of operating the system 10 are provided. The system is generally configured to make use of a host-vehicle 12 to provide physical protection to a pedestrian 24 who is not a passenger/occupant of the host-vehicle 12.

While this invention has been described in terms of the preferred embodiments thereof, it is not intended to be so limited, but rather only to the extent set forth in the claims that follow.

## Claims

1. A safety system (10) intended for use by a host-vehicle (12), said system (10) comprising:
an object-detector (18) associated with the host-vehicle (12) and operable to detect a pedestrian (24) and a travel-path (28) of an approaching-vehicle (20) proximate to the host-vehicle (12) when the host-vehicle (12) is in an adjacent lane (30) next to a lane identified as the travel-path (28), and
a controller (22) associated with the host-vehicle (12) and in communication with the object-detector (18), wherein the controller (22) is configured to operate the host-vehicle (12) to move the host-vehicle (12) into the lane identified as the travel-path (28) from the adjacent-lane (39) to obstruct the travel-path (28) of the approaching-vehicle (20) when unimpeded travel by the approaching-vehicle (20) on the travel-path (28) may result in a collision between the pedestrian (24) and the approaching-vehicle (20).

2. The system (10) in accordance with claim 1, wherein the controller (22) is configured to operate the host-vehicle (12) to obstruct the travel-path (28) of the approaching-vehicle (20) only when the host-vehicle (12) is not occupied by a passenger.

3. The system (10) in accordance with claim 1, wherein the controller (22) is configured to operate the host-vehicle (12) to initiate physical-contact with the approaching-vehicle (20) to prevent the collision between the pedestrian (24) and the approaching-vehicle (20).

4. The system (10) in accordance with claim 1, wherein the controller (22) activates a warning-signal (36) when unimpeded travel by the approaching-vehicle (20) on the travel-path (28) may result in the collision between the pedestrian (24) and the approaching-vehicle (20).

5. The system (10) in accordance with claim 1, wherein the controller (22) is configured to notify nearby infrastructure when unimpeded travel by the approaching-vehicle (20) on the travel-path (28) may result in the collision between the pedestrian (24) and the approaching-vehicle (20).

6. The system (10) in accordance with claim 1, wherein the controller (22) is configured to notify nearby vehicles proximate to the pedestrian (24) when unimpeded travel by the approaching-vehicle (20) on the travel-path (28) may result in the collision between the pedestrian (24) and the approaching-vehicle (20).

7. The system (10) in accordance with claim 1, wherein the controller (22) is configured to notify a passenger of the host-vehicle (12) when unimpeded travel by the approaching-vehicle (20) on the travel-path (28) may result in the collision between the pedestrian (24) and the approaching-vehicle (20).

8. The system (10) in accordance with claim 1, wherein the controller (22) is configured to:
determine a vehicle-vector (32) that indicates a speed and direction of travel of the approaching-vehicle (20);
determine a pedestrian-vector (34) that indicates a speed and direction of travel of the pedestrian (24); and
determine if the vehicle-vector (32) and the pedestrian-vector (34) suggest that a collision of the pedestrian (24) and the approaching-vehicle (20) is likely.

9. A method comprising:
operating an object-detector (18) to detect a pedestrian (24) and a travel-path (28) of an approaching-vehicle (20) proximate to a host-vehicle (12) located on an adjacent-lane (30) next to a lane identified as the travel-path (28), and
operating the host-vehicle (12) to move the host-vehicle (12) into the lane identified as the travel-path (28) to obstruct the travel-path (28) of the approaching-vehicle (20) when unimpeded travel by the approaching-vehicle (20) on the travel-path (28) may result in the collision between the pedestrian (24) and the approaching-vehicle (20).

10. The method in accordance with claim 9, wherein operating the host-vehicle (12) to move the host-vehicle (12) onto the lane identified as the travel-path (28) of the approaching-vehicle (20) occurs only when the host-vehicle (12) is not occupied by a passenger.

11. The method in accordance with claim 9, wherein operating the host-vehicle (12) to move the host-vehicle (12) onto the lane identified as the travel-path (28) of the approaching-vehicle (20) comprises operating the host-vehicle (12) to initiate physical-contact with the approaching-vehicle (20) to prevent the collision between the pedestrian (24) and the approaching-vehicle (20).

12. The method in accordance with claim 9, wherein the method comprises activating a warning-signal (36) when unimpeded travel by the approaching-vehicle (20) on the travel-path (28) may result in the collision between the pedestrian (24) and the approaching-vehicle (20).

13. The method in accordance with claim 9, wherein the method comprises notifying nearby infrastructure when unimpeded travel by the approaching-vehicle (20) on the travel-path (28) may result in the collision between the pedestrian (24) and the approaching-vehicle (20).

14. The method in accordance with claim 9, wherein the method comprises notifying nearby vehicles proximate to the pedestrian (24) when unimpeded travel by the approaching-vehicle (20) on the travel-path (28) may result in the collision between the pedestrian (24) and the approaching-vehicle (20).

15. The method in accordance with claim 9, wherein the method comprises notifying a passenger of the host-vehicle (12) when unimpeded travel by the approaching-vehicle (20) on the travel-path (28) may result in the collision between the pedestrian (24) and the approaching-vehicle (20).

## Patentansprüche

1. Sicherheitssystem (10), das zur Verwendung durch ein Host-Fahrzeug (12) bestimmt ist, wobei das System (10) umfasst:
einen Objektdetektor (18), der dem Host-Fahrzeug (12) zugeordnet ist und betreibbar ist, um einen Fußgänger (24) und einen Fahrweg (28) eines herannahenden Fahrzeugs (20) in der Nähe des Host-Fahrzeugs (12) zu erfassen, wenn sich das Host-Fahrzeug (12) in einer benachbarten Spur (30) neben einer als der Fahrweg (28) identifizierten Spur befindet, und
ein Steuergerät (22), das dem Host-Fahrzeug (12) zugeordnet ist und mit dem Objektdetektor (18) in Kommunikation steht, wobei das Steuergerät (22) so konfiguriert ist, dass es das Host-Fahrzeug (12) so betreibt, dass es das Host-Fahrzeug (12) von der benachbarten Spur (39) in die als der Fahrweg (28) identifizierte Spur bewegt, um den Fahrweg (28) des herannahenden Fahrzeugs (20) zu versperren, wenn eine ungehinderte Fahrt des herannahenden Fahrzeugs (20) auf dem Fahrweg (28) zu einer Kollision zwischen dem Fußgänger (24) und dem herannahenden Fahrzeug (20) führen könnte.

2. System (10) nach Anspruch 1, wobei das Steuergerät (22) so konfiguriert ist, dass es das Host-Fahrzeug (12) nur dann so betreibt, dass es den Fahrweg (28) des herannahenden Fahrzeugs (20) versperrt, wenn das Host-Fahrzeug (12) nicht mit einem Fahrgast besetzt ist.

3. System (10) nach Anspruch 1, wobei das Steuergerät (22) so konfiguriert ist, dass es das Host-Fahrzeug (12) so betreibt, dass es einen physischen Kontakt mit dem herannahenden Fahrzeug (20) einleitet, um die Kollision zwischen dem Fußgänger (24) und dem herannahenden Fahrzeug (20) zu verhindern.

4. System (10) nach Anspruch 1, wobei das Steuergerät (22) ein Warnsignal (36) aktiviert, wenn eine ungehinderte Fahrt des herannahenden Fahrzeugs (20) auf dem Fahrweg (28) zu der Kollision zwischen dem Fußgänger (24) und dem herannahenden Fahrzeug (20) führen könnte.

5. System (10) nach Anspruch 1, wobei das Steuergerät (22) so konfiguriert ist, dass es eine nahegelegene Infrastruktur benachrichtigt, wenn eine ungehinderte Fahrt des herannahenden Fahrzeugs (20) auf dem Fahrweg (28) zu der Kollision zwischen dem Fußgänger (24) und dem herannahenden Fahrzeug (20) führen könnte.

6. System (10) nach Anspruch 1, wobei das Steuergerät (22) so konfiguriert ist, dass es in der Nähe des Fußgängers (24) befindliche Fahrzeuge benachrichtigt, wenn eine ungehinderte Fahrt des herannahenden Fahrzeugs (20) auf dem Fahrweg (28) zu der Kollision zwischen dem Fußgänger (24) und dem herannahenden Fahrzeug (20) führen könnte.

7. System (10) nach Anspruch 1, wobei das Steuergerät (22) so konfiguriert ist, dass es einen Fahrgast des Host-Fahrzeugs (12) benachrichtigt, wenn eine ungehinderte Fahrt des herannahenden Fahrzeugs (20) auf dem Fahrweg (28) zu der Kollision zwischen dem Fußgänger (24) und dem herannahenden Fahrzeug (20) führen könnte.

8. System (10) nach Anspruch 1, wobei das Steuergerät (22) so konfiguriert ist, dass es:
einen Fahrzeugvektor (32) ermittelt, der eine Geschwindigkeit und Fahrtrichtung des herannahenden Fahrzeugs (20) angibt;
einen Fußgängervektor (34) ermittelt, der eine Geschwindigkeit und Bewegungsrichtung des Fußgängers (24) angibt; und
ermittelt, ob der Fahrzeugvektor (32) und der Fußgängervektor (34) darauf hindeuten, dass eine Kollision des Fußgängers (24) mit dem herannahenden Fahrzeug (20) wahrscheinlich ist.

9. Verfahren, das umfasst:
Betreiben eines Objektdetektors (18) zum Erfassen eines Fußgängers (24) und eines Fahrweges (28) eines herannahenden Fahrzeugs (20) in der Nähe eines Host-Fahrzeugs (12), das sich auf einer benachbarten Spur (30) neben einer als der Fahrweg (28) identifizierten Spur befindet, und
Betreiben des Host-Fahrzeugs (12), um das Host-Fahrzeug (12) in die als der Fahrweg (28) identifizierte Spur zu bewegen, um den Fahrweg (28) des herannahenden Fahrzeugs (20) zu versperren, wenn eine ungehinderte Fahrt des herannahenden Fahrzeugs (20) auf dem Fahrweg (28) zu der Kollision zwischen dem Fußgänger (24) und dem herannahenden Fahrzeug (20) führen könnte.

10. Verfahren nach Anspruch 9, wobei das Betreiben des Host-Fahrzeugs (12) zum Bewegen des Host-Fahrzeugs (12) auf die als der Fahrweg (28) des herannahenden Fahrzeugs (20) identifizierte Spur nur dann erfolgt, wenn das Host-Fahrzeug (12) nicht mit einem Fahrgast besetzt ist.

11. Verfahren nach Anspruch 9, wobei das Betreiben des Host-Fahrzeugs (12) zum Bewegen des Host-Fahrzeugs (12) auf die als der Fahrweg (28) des herannahenden Fahrzeugs (20) identifizierte Spur das Betreiben des Host-Fahrzeugs (12) zum Einleiten eines physischen Kontakts mit dem herannahenden Fahrzeug (20) umfasst, um die Kollision zwischen dem Fußgänger (24) und dem herannahenden Fahrzeug (20) zu verhindern.

12. Verfahren nach Anspruch 9, wobei das Verfahren umfasst
Aktivieren eines Warnsignals (36), wenn eine ungehinderte Fahrt des herannahenden Fahrzeugs (20) auf dem Fahrweg (28) zu der Kollision zwischen dem Fußgänger (24) und dem herannahenden Fahrzeug (20) führen könnte.

13. Verfahren nach Anspruch 9, wobei das Verfahren umfasst
Benachrichtigen einer nahegelegenen Infrastruktur, wenn eine ungehinderte Fahrt des herannahenden Fahrzeugs (20) auf dem Fahrweg (28) zu der Kollision zwischen dem Fußgänger (24) und dem herannahenden Fahrzeug (20) führen könnte.

14. Verfahren nach Anspruch 9, wobei das Verfahren umfasst
Benachrichtigen von Fahrzeugen in der Nähe des Fußgängers (24), wenn eine ungehinderte Fahrt des herannahenden Fahrzeugs (20) auf dem Fahrweg (28) zu der Kollision zwischen dem Fußgänger (24) und dem herannahenden Fahrzeug (20) führen könnte.

15. Verfahren nach Anspruch 9, wobei das Verfahren umfasst
Benachrichtigen eines Insassen des Host-Fahrzeugs (12), wenn eine ungehinderte Fahrt des herannahenden Fahrzeugs (20) auf dem Fahrweg (28) zu der Kollision zwischen dem Fußgänger (24) und dem herannahenden Fahrzeug (20) führen könnte.

## Revendications

1. Système de sécurité (10) prévu pour une utilisation par un véhicule hôte (12), ledit système (10) comprenant :
un détecteur d'objet (18) associé au véhicule hôte (12) et dont la fonction est de détecter un piéton (24) et un trajet de déplacement (28) d'un véhicule qui s'approche (20) à proximité du véhicule hôte (12) quand le véhicule hôte (12) est dans une voie adjacente (30) près d'une voie identifiée comme étant le trajet de déplacement (28), et
un contrôleur (22) associé au véhicule hôte (12) et en communication avec le détecteur d'objet (18), dans lequel le contrôleur (22) est configuré pour actionner le véhicule hôte (12) pour déplacer le véhicule hôte (12) jusque dans la voie identifiée comme étant le trajet de déplacement (28) depuis la voie adjacente (39) pour obstruer le trajet de déplacement (28) du véhicule qui s'approche (20) quand un déplacement sans entrave par le véhicule qui s'approche (20) sur le trajet de déplacement (28) peut entraîner une collision entre le piéton (24) et le véhicule qui s'approche (20).

2. Système (10) selon la revendication 1, dans lequel le contrôleur (22) est configuré pour actionner le véhicule hôte (12) pour obstruer le trajet de déplacement (28) du véhicule qui s'approche (20) uniquement quand le véhicule hôte (12) n'est pas occupé par un passager.

3. Système (10) selon la revendication 1, dans lequel le contrôleur (22) est configuré pour actionner le véhicule hôte (12) pour amorcer un contact physique avec le véhicule qui s'approche (20) pour empêcher la collision entre le piéton (24) et le véhicule qui s'approche (20).

4. Système (10) selon la revendication 1, dans lequel le contrôleur (22) active un signal de mise en garde (36) quand un déplacement sans entrave par le véhicule qui s'approche (20) sur le trajet de déplacement (28) peut entraîner la collision entre le piéton (24) et le véhicule qui s'approche (20).

5. Système (10) selon la revendication 1, dans lequel le contrôleur (22) est configuré pour notifier une infrastructure proche quand un déplacement sans entrave par le véhicule qui s'approche (20) sur le trajet de déplacement (28) peut entraîner la collision entre le piéton (24) et le véhicule qui s'approche (20).

6. Système (10) selon la revendication 1, dans lequel le contrôleur (22) est configuré pour notifier des véhicules proches à proximité du piéton (24) quand un déplacement sans entrave par le véhicule qui s'approche (20) sur le trajet de déplacement (28) peut entraîner la collision entre le piéton (24) et le véhicule qui s'approche (20).

7. Système (10) selon la revendication 1, dans lequel le contrôleur (22) est configuré pour notifier un passager du véhicule hôte (12) quand un déplacement sans entrave par le véhicule qui s'approche (20) sur le trajet de déplacement (28) peut entraîner la collision entre le piéton (24) et le véhicule qui s'approche (20).

8. Système (10) selon la revendication 1, dans lequel le contrôleur (22) est configuré pour :
déterminer un vecteur de véhicule (32) qui indique une vitesse et une direction de déplacement du véhicule qui s'approche (20) ;
déterminer un vecteur de piéton (34) qui indique une vitesse et une direction de déplacement du piéton (24) ; et
déterminer si le vecteur de véhicule (32) et le vecteur de piéton (34) suggèrent qu'une collision du piéton (24) et du véhicule qui s'approche (20) est probable.

9. Procédé comprenant les étapes consistant à :
actionner un détecteur d'objets (18) pour détecter un piéton (24) et un trajet de déplacement (28) d'un véhicule qui s'approche (20) à proximité d'un véhicule hôte (12) situé sur une voie adjacente (30) près d'une voie identifiée comme étant le trajet de déplacement (28), et
actionner le véhicule hôte (12) pour déplacer le véhicule hôte (12) jusque dans la voie identifiée comme étant le trajet de déplacement (28) pour obstruer le trajet de déplacement (28) du véhicule qui s'approche (20) quand un déplacement sans entrave par le véhicule qui s'approche (20) sur le trajet de déplacement (28) peut entraîner la collision entre le piéton (24) et le véhicule qui s'approche (20).

10. Procédé selon la revendication 9, dans lequel l'étape consistant à actionner le véhicule hôte (12) pour déplacer le véhicule hôte (12) jusque sur la voie identifiée comme étant le trajet de déplacement (28) du véhicule qui s'approche (20) a lieu uniquement quand le véhicule hôte (12) n'est pas occupé par un passager.

11. Procédé selon la revendication 9, dans lequel l'étape consistant à actionner le véhicule hôte (12) pour déplacer le véhicule hôte (12) jusque sur la voie identifiée comme étant le trajet de déplacement (28) du véhicule qui s'approche (20) comprend l'opération consistant à actionner le véhicule hôte (12) pour amorcer un contact physique avec le véhicule qui s'approche (20) pour empêcher la collision entre le piéton (24) et le véhicule qui s'approche (20).

12. Procédé selon la revendication 9, dans lequel le procédé comprend l'étape consistant à activer un signal de mise en garde (36) quand un déplacement sans entrave par le véhicule qui s'approche (20) sur le trajet de déplacement (28) peut entraîner la collision entre le piéton (24) et le véhicule qui s'approche (20).

13. Procédé selon la revendication 9, dans lequel le procédé comprend l'étape consistant à notifier une infrastructure proche quand un déplacement sans entrave par le véhicule qui s'approche (20) sur le trajet de déplacement (28) peut entraîner la collision entre le piéton (24) et le véhicule qui s'approche (20).

14. Procédé selon la revendication 9, dans lequel le procédé comprend l'étape consistant à notifier des véhicules proches à proximité du piéton (24) quand un déplacement sans entrave par le véhicule qui s'approche (20) sur le trajet de déplacement (28) peut entraîner la collision entre le piéton (24) et le véhicule qui s'approche (20).

15. Procédé selon la revendication 9, dans lequel le procédé comprend l'étape consistant à notifier un passager du véhicule hôte (12) quand un déplacement sans entrave par le véhicule qui s'approche (20) sur le trajet de déplacement (28) peut entraîner la collision entre le piéton (24) et le véhicule qui s'approche (20).
